# EUROPEAN PATENT SPECIFICATION

(11) **EP 3 650 735 B1**
(45) Date of publication and mention of the grant of the patent: **16.02.2022**
(21) Application number: 19203450.2
(22) Date of filing: 16.10.2019
(51) Int. Cl.: F16H 59/02, F16H 61/24, B60K 20/06

(54) **GEAR PADDLE SWITCH UNIT FOR TRIGGERING A GEAR SHIFT IN A VEHICLE**
GANG-DREHFLÜGELMELDER ZUM AUSLÖSEN EINER GANGSCHALTUNG IN EINEM FAHRZEUG
UNITÉ DE COMMUTATION DE PALETTE D'ENGRENAGE POUR DÉCLENCHER UN CHANGEMENT DE RAPPORT DANS UN VÉHICULE

(30) Priority: 08.11.2018 DE 102018127979
(43) Date of publication of application: 13.05.2020
(73) Proprietor: Valeo Schalter und Sensoren GmbH, 74321 Bietigheim-Bissingen (DE)
(72) Inventor: MASUELLI, Domenico, 10026 Santena (IT); MAGI, Giancarlo, 10026 Santena (IT); PESTARINO, Fabio, 10026 Santena (IT)
(74) Representative: Pothmann, Karsten

(56) References cited:
- EP-A1- 1 615 250
- US-A- 5 224 393
- US-A1- 2008 202 278
- US-A1- 2011 061 488

## Description

The present invention relates to a gear paddle switch unit for triggering a gear shift in a vehicle. The present invention further relates to a gear paddle switch unit which comprises at least one steering wheel paddle which is designed for actuating a gear shift, wherein the unit provides an improved actuating response and a reduced time for performing a gear shift.

It is known to provide different units for performing a gear shift. Generally, a device for actuating a gear shift is a gear lever which is provided between the front seats. Such systems are well known in the art.

However, especially with regard to sportive cars, it is known to exchange the gear lever by steering wheel gear shift paddles which are provided at the steering wheel. Such paddles are then called steering wheel paddles and have the advantage that the driver may use these paddles without moving the hand from the steering wheel. This on the one hand allows a very fast gear shift which may be advantageous for sportive cars. On the other hand, such paddles may provide an improved security as the driver may use the steering wheel with both hands independently of a gear shift. A gear paddle switch unit is known for example from US 5 224 939.

According to the prior art and thus in current solutions on the market for paddle gear shift, respective switches foresee the use of plunger moving in an area with a counterpart made of plastic with a ramp shape. The friction between the plunger with a rotating roller on top and the plastic ramp gives the feeling of the actuation, in terms of curve shape and actuation force.

Such systems, however, still give room for improvements. Especially, such solutions give room for improvements with regard to providing a unit for performing a gear shift in a vehicle with at least one of a fast gear shift, a reliable arrangement and an improved response for the user of the vehicle.

It is thus an object of the present invention to overcome at least one disadvantage of the prior art. It is particularly an object of the present invention to provide an improved gear paddle switch unit for performing a gear change in a vehicle.

These objects are solved at least in part by a gear paddle switch unit for triggering a gear shift in a vehicle having the features of independent claim 1. Advantageous embodiments are given in the dependent claims, in the further description as well as in the figures.

In particular, the present invention provides a gear paddle switch unit for triggering a gear shift in a vehicle, wherein the gear paddle switch unit comprises a main body, and at least one steering wheel paddle with an actuation portion or actuating the steering wheel paddle by a user and an opposing triggering portion for triggering a gear shift, wherein the gear paddle switch unit further comprises a bearing for movably fixing the at least one steering wheel paddle such, that the triggering portion is pivotable relatively to the main body between a resting position and a triggering position, wherein the triggering portion is held in the resting position preloaded with a preload force caused by a triggering unit so that the triggering portion is moved from the triggering position to the resting position by said preload force after release of the steering wheel paddle by the user in the triggering position, wherein the triggering unit is configured for providing a magnetic force for preloading the triggering portion in the resting position for providing a haptic feedback to a user when actuating the steering wheel paddle.

Such a gear paddle switch unit may provide improvements with regard to performing a gear shift in a vehicle with at least one of a fast gear shift, a reliable arrangement and an improved haptic response for the user of the vehicle.

The present invention thus refers to a gear paddle switch unit for triggering a gear shift in a vehicle. Thus, the unit is configured for receiving instructions for a gear shift and in turn triggering the gear shift for example in an electronic matter. Thus, a mechanism may be activated which in turn performs the gear shift. Further, the gear paddle switch unit is particularly suited for a vehicle, such as a car.

The gear paddle switch unit comprises a main body. The main body may particularly a part which may support further parts of the unit, such as one or more gear shift paddles and may thus be a central part of the unit. The main body may be formed as a one part body, or it may be formed from a plurality of parts.

Further, the gear paddle switch unit comprises at least one steering wheel paddle. Such paddles are generally known in the art for an advantageous alternative with regard to gear levers which are provided between the front seats, for example. Such gear shift paddles are provided at the steering wheel and have the advantage that the driver may use these paddles without moving the hand from the steering wheel. This on the one hand allows a very fast gear shift which may be advantageous for sportive cars. On the other hand, such paddles may provide an improved security as the driver may use the steering wheel with both hands independently of a gear shift.

In the following, the arrangement of a steering wheel paddle is described wherein it is obvious for the person skilled in the art that two steering wheel paddles may be provided, both of which may be arranged respectively. Further, the arrangement of a magnet is described in an embodiment of the invention, wherein it may be provided that a plurality of magnets may be provided related to each or single steering wheel paddles, and wherein further magnets may be designed according to the respective description or in a different manner.

The steering wheel paddle comprises an actuation portion for actuating the steering wheel paddle by a user. In other words, the steering wheel paddle comprises a first portion which is designed for actuating the latter. Thus, this portion is configured such, that a driver of the vehicle may activate the steering paddle especially by introducing a pivoting force to the actuating portion. In other words, the actuating portion is provided for being used by the driver of the vehicle.

Further, the steering wheel paddle comprises a triggering portion for triggering a gear shift. This portion is thus configured for actively triggering a gear shift. With this regard, there is a plurality of arrangements which may allow triggering the gear shift like described below. The triggering portion is positioned opposing the actuating portion.

The gear paddle switch unit further comprises a bearing for movably fixing the at least one steering wheel paddle. In other words, the steering wheel paddle is fixed in a pivoted manner and thus may be pivoted or rotated, respectively, around a pivot axis. The bearing for pivoting the steering wheel paddle may generally be located as required for the specific application. For example, the bearing may be part of the main body. This allows an especially easy and long-tern stable arrangement. Further, it may be provided that the steering wheel paddle is pivoted between the triggering portion and the actuating portion.

It is further provided that each steering wheel paddle comprises a resting position and a triggering position, wherein the steering wheel paddle is transferable from the resting position to the triggering position and vice versa by a pivoting action. With this regard, it may be provided that the pivot axis divides the steering wheel paddle into the actuating portion and the triggering portion. In other words, starting from the pivot axis, one portion of the steering wheel paddle may form the actuating portion whereas the opposite portion forms the triggering portion. Therefore, the bearing for movably fixing the at least one steering wheel paddle is arranged such, that the triggering portion is pivotable relatively to the main body between a resting position and a triggering position.

In case the steering wheel paddle is provided in a resting position, no action is performed, i.e. no gear shift shall be arranged at this time. In case, however, a gear shift is desired, the steering wheel paddle is activated by a user e.g. by pulling the actuating portion so that the steering wheel paddle is pivoted or rotated, respectively. This allows that the steering wheel paddle reaches its triggering position. According to this, the triggering position is that position in which a gear shift is triggered and thus the gear shift may be performed by a further mechanism.

It is further provided that the triggering portion is held in the resting position preloaded with a preload force caused by a triggering unit so that the triggering portion is moved from the triggering position to the resting position by said preload force after release of the steering wheel paddle by the user in the triggering position.

With this regard, the triggering unit may generally be arranged in different ways insofar the triggering unit may achieve a preload force which is directed such, that the triggering portion is held in the resting position preloaded with said preload force. In other words, in case the steering wheel paddle is not actuated by a used, the preload force positions the triggering portion in the resting position. In turn, due to the provision of the preload force, the latter has to be overcome in order to move the steering wheel paddle in a pivoting manner so that the steering wheel paddle is transferred from its resting position to its triggering position. On the other hand, the provided preload force acts such that the triggering portion is moved from the triggering position to the resting position by said preload force after release of the steering wheel paddle by the user in the triggering position, i.e. in case the user releases the steering wheel paddle when the latter is positioned in the triggering position.

With regard to the preload force, it is provided that the triggering unit is configured for providing a magnetic force for preloading the triggering portion in the resting position for providing a haptic feedback to a user when actuating the steering wheel paddle. In other words, the preload force is arranged as a magnetic force which acts such, that the triggering portion is preloaded to the resting position. Such an arrangement may generally be arranged as it is required for the specific application and is described in more detail below.

According to the invention, it is provided that the triggering unit comprises a magnet element and a ferromagnetic counterpart, or it may consist thereof. This allows that the magnet element exerts a magnetic force to the counter element which may provide the preload force in case the magnet element and the counterpart are respectively arranged like described in more detail below.

With this regard, the gear paddle switch unit may comprise at least one magnet element which exerts a magnetic force to a counterpart thereby magnetically attracting the counterpart. It may be provided that the magnet element contacts the corresponding counterpart or it may be provided that a spacer contacts the counterpart and serves for a defined distance between the magnet element and its corresponding counterpart. This is described in more detail below.

According to the above, in case the steering wheel paddle is activated by a driver and thus the steering wheel paddle is pivoted or rotated, respectively, the pivoting action and thus the activation by the driver in order to bring the steering wheel paddle into its triggering position has to be performed against the magnetic attraction and thus against the magnetic preload force of the at least one magnet.

Especially such an arrangement may provide significant advantages over the solutions of the prior art.

In detail, this solution is especially advantageous against solutions which are known in the prior art. With this regard, according to the prior art and thus in current solutions on the market for paddle gear shifts, respective switches foresee the use of plunger moving in an area with a counterpart made of plastic with a ramp shape. The friction between the plunger with a rotating roller on top and the plastic ramp gives the feeling of the actuation, in terms of curve shape and actuation force.

Such solutions thus use mechanical parts which are touching each other and which mechanically counteract with each other. With this regard, mechanical wear may appear and thus the danger of the parts undergo aging and may be damaged sometimes cannot be completely excluded. In contrast to this, the solution according to the present invention avoids mechanical parts touching each other so that mechanical wear and the problems arising therewith can be excluded. Accordingly, the solution according to the invention may be much more reliable compared to the solutions of the prior art.

Apart from that, it is mostly important for an activating action such as for an activating action with regard to a gear shift that the driver who performs this activation gets a response, such as a haptic response. This allows that the driver directly knows if the activating action was successful. With this regard, due to the fact that activating the steering wheel paddle has to be performed against the magnetic preload force, a strong haptic feedback to the driver of the vehicle and thus for the person who activated the steering wheel paddle may be provided. In fact, the feeling of the actuation is now provided by the magnetic attraction of the magnet towards the ferromagnetic counterpart, for example. Therefore, providing a solution according to the present invention may significantly improve using a system for triggering a gear shift and thus especially such a system which uses steering wheel paddles.

Apart from the above, the obtained actuation may provide actuation results which are much quicker due to the magnet behavior compared to solutions according to the prior art. Thus, gear shifts as such may be performed with a higher speed which may be an important factor especially for sportive cars, however not being restricted thereto. In detail, an accelerated gear shift may be advantageous for any vehicle.

As a result, a gear shift may be provided faster, more reliable and with an improved haptic feedback, which strongly improves a gear shift especially with regard to conventional systems comprising steering wheel paddles for triggering a gear shift. With regard to the arrangement of the triggering unit, some non-limiting embodiments are described as follows for explanation purposes.

It is provided that the magnet element is provided at the triggering portion and in that the ferromagnetic counterpart is comprised by the main body. According to this embodiment, the one or more magnets may thus be positioned in or on the triggering portion which may allow the main body to be formed as known in the art and thus very simple and in a cost-saving manner. This allows an especially easy implementation in conventional production processes and designs. Apart from that, it has been shown that especially in case the magnet is provided at the triggering portion and thus in the steering wheel paddle, or in other words, in the part which is used by the driver of the vehicle, the haptic feedback of a gear shift may be transferred to the driver especially effectively.

Apart from that, in case the distance of the magnet to its counterpart and thus in this case to the main body should be adjusted like described below, this may be realized especially effectively and easily in case this is realized in the moving part.

Therefore, it has been shown that the advantages of the invention may be realized especially effectively in this embodiment of the present invention.

According to the invention, it is provided that the main body comprises a bracket as ferromagnetic counterpart which traverses the magnet element of the steering wheel paddle. For example, it may be provided that the bracket traverses the magnets of both steering wheel paddles in case two steering wheel paddles are provided and are arranged respectively. According to this embodiment, the bracket may be mounted by screws, for example, in an easy manner to a further part of the main body. For example, between the bracket and the further part of the main body, there may be a gap I which the triggering portion is provided. It is thus clear that according to this embodiment, the main body comprises at least two parts. Further, such a bracket may be formed in an easy and defined manner in each required dimension and size. Thus, a very low weight may be reached which is advantageous especially in mobile applications, such as in vehicles. Further, an especially easy and effective adaption of the gear paddle switch unit may be provided. Therefore, this embodiment allows a cost-saving and simple manufacturing of the system which is advantageous especially with regard to mobile applications.

Alternatively, but not forming part of the invention, it may be provided that the magnet element is provided at the main body and in that the ferromagnetic counterpart is comprised by the triggering portion. This embodiment may be realized especially effective especially in applications which provide small assembly space, only, such as in sportive cars. This may be due to the fact that the main body may have sizes which are larger compared to the triggering portion so that small assembly spaces may be realized especially effective according to this embodiment.

However, additionally to the above described embodiments, depending on the specific requirements, it may be advantageous that the magnet and the counterpart are not both formed by the main body and the triggering portion but in that the preload force to the triggering portion is caused by a further object. Therefore, in order to have a large degree of freedom with regard to specific applications and requirements, it may further be provided that the magnet element is provided at the triggering portion and in that the ferromagnetic counterpart is comprised by a part distinct from the main body or in that the ferromagnetic counterpart is comprised by the triggering portion and the magnet element is provided at a part distinct from the main body. The part which is distinct from the main body and is thus no part of the main body may generally be chosen in a free manner insofar the respective preload force may be provided.

It may further be provided that in a resting position, the triggering portion is positioned in contact to a support and that in a triggering position, the triggering portion is positioned spaced apart from the support. Thus, the triggering portion may be positioned against the support by means of the preload force. Like indicated above, the steering wheel paddle is configured for being pivoted by activating the actuating portion for positioning the steering wheel paddle in its triggering position. Therefore, the position of the triggering portion in a resting position is adjacent to said support, wherein by pivoting the steering wheel paddle, such as activated by a driver via the actuating portion, the triggering portion is positioned spaced apart from the support. With this regard, the deviating position of the triggering portion in the resting position of the steering wheel paddle compared to the triffering position of the steering wheel paddle may for example be used for triggering and in turn performing a gear shift.

Therefore, the preload force acts such, that increasing the distance from the triggering portion to the support is performed against the preload force, i.e. the magnetic force.

The support may for example be part of the main body or it may be a part distinct from the main body. Following the above, it may be provided that the magnet is provided at the triggering portion and in that the support is formed from a ferromagnetic material or that the magnet is provided at the support and in that the triggering portion is formed from a ferromagnetic material.

It may further be provided that a sensor is provided for detecting the position of the triggering portion. With this regard, especially a magnetic sensor may be provided. With this regard, the position of the magnet element relative to the sensor may be detected which may be transferred to electrical signals. This may thus allow guiding the electrical signals to a further mechanism which affects the gear shift. It is thus clear to the person skilled in the art that the sensor according to this embodiment may be positioned in a very free manner, for example at the counterpart of the magnet. With this regard, in the non-limiting case according to which the magnet is provided in the triggering portion and thus in the steering wheel paddle, the sensor may be provided in a static part of the system, such as connected to main body. On the other side, in case the magnet is provided at the main body, for example, the sensor may be located at and thus in contact with the steering wheel paddle, or its triggering portion, respectively.

It may further be advantageous that the magnet element is formed as a neodymium magnet. This embodiment may allow the magnet to have a very strong magnetization which in turn allows a very strong magnetic force and thus a very strong attraction of the counterpart which interacts with the magnet. This embodiment thus allows a very strong haptic feedback to the driver who activates the steering wheel paddle and thus who triggers the gear shift and thus improves the advantages as described before especially effectively.

Apart from that, due to the strong magnetic force and thus the strong attraction of the counterpart which interacts with the magnet, it may be ensured that the triggering portion stays in its resting position such as adjacent to the support unless it is really desired to activate the steering wheel paddle and thus to trigger a gear shift. This embodiment thus allows triggering a gear shift only in case it is desired. False activations for example caused by vibration due to bad roads may thus be excluded. This allows improving the security of driving the vehicle.

Further, it may be provided that at least one disc magnet is provided, wherein the disc magnet is formed with a radial magnetization. According to this embodiment, it may be allowed that only one magnet may be provided at each steering wheel paddle which may improve the construction of the respective paddle arrangement. This may be due to the fact that the magnetic field may be defined in a very effective manner with only one magnet which provides an effective magnetic attraction of the respective counterpart. Further, a high magnetic force may be combined with a small-sized arrangement, thus allowing realizing the present invention at applications in which only small spaces are available, such as in sportive cars.

It may further be provided that at least one rod magnet is provided. With this regard, a very simple and cost-saving arrangement may be realized. Apart from that, rod magnets are available in a plurality of magnetic forces and sizes.

However, it might be especially preferred that at least two rod magnets are provided in vicinity to each other with a reversed orientation of the poles. Especially this arrangement may allow a very defined and further a very strong magnetic field which in turn allows a very strong magnetic attraction of the respective counterpart. Therefore, this embodiment allows that the advantages as described before may be achieved especially effectively.

It may further be provided that the distance of the magnet to ferromagnetic counterpart is adjustable. In other words, the distance of the magnet to its counterpart may be adjusted, so that in case the magnet is provided in the triggering position, its distance to the main body in a non-limiting example may be adjusted, whereas in case the magnet is provided in the main body, for example, its distance to the triggering portion may be adjusted.

As an example, it may be provided that the magnet is fixed by means of a screw against a spring force. With this regard, the part the magnet element is provided in, such as for example the main body or the steering wheel paddle, or its triggering portion, respectively, may comprise a respective reception, wherein beneath the magnet there is provided an element which exerts a spring force against the magnet. For example, the element providing a spring force may be a simple spring or it may be an elastic element which is compressed when mounting and fixing the magnet, such as an element formed from EPDM (ethylene propylene diene monomer rubber).

This embodiment allows in a very simple and on the other side very effective and defined manner to adjust the distance of the magnet to its counterpart just by defining the position of the screw. With this regard, by fastening the screw, the magnet may be positioned deeper in the reception and thus the distance to the counterpart may be increased. However, by releasing the screw, the magnet may be positioned less deep in the reception due to the spring force and thus the distance to the counterpart may be decreased.

Adjusting the distance of the magnet to the counterpart may be especially advantageous as the respective distance has a strong influence on the attraction of the counterpart. Therefore, the activating properties and the strength of the steering wheel paddle being preloaded in its resting position may easily and effectively adapted in an easy manner. Therefore, an adaption is even possible after manufacturing the system so that an adaption may be realized based on the requests of a customer. This even more shows the adaptability to the desired needs.

However, using a screw like described before is a preferred embodiment but does not limit the adjustment of the position of the magnet relative to its counterpart. It may for example be provided that the magnet itself is provided with a thread and such magnet may be positioned in a corresponding threat. This may allow adjusting the position of the magnet relative to its counterpart by rotating the magnet itself. Additionally, further different embodiments may be provided for adjusting the distance of the magnet to its counterpart.

It may further be preferred that the triggering portion comprises a spacer for coming in contact to a support for supporting the triggering portion in a resting position or that a support for supporting the triggering portion in a resting position comprises a spacer for coming in contact to the triggering portion. According to this, the distance of the triggering portion to the support and thus in particular of the magnet to its counterpart may be adjusted in a very defined manner so that on the other side the magnetic force and thus the magnetic attraction of the magnet to its counterpart may be adjusted in a very defined manner. This allows a very defined working behavior of the steering wheel paddles. For example, the spacer may be formed of a polymeric material, such as polyamide which may be glass fiber reinforced, for example PA6 GF50.

In case the thickness of the spacer may alter due to mechanic load, it may be especially advantageous that the distance of the magnet to its counterpart may be adjusted like described before in order to allow the respective distance to be adjusted in a long-term reliability.

With regard to this distance it may further be preferred that that the magnet element is positioned in a resting position of the steering wheel paddle in a distance to the ferromagnetic counterpart in a range of > 0 mm to ≤ 5mm. Preferred distances as described above from the magnet to its ferromagnetic counterpart may lie in a range of > 0 mm to ≤ 3,5mm, such as ≥ 2mm to ≤ 3,5mm. It has been found that especially such distances allow a preferred combination of haptic feedback, detectability of the position of the steering wheel paddle by a sensor and additionally of the force holding the steering wheel paddle in its resting position in case no gear shift is desired, like described before. Therefore, especially this embodiment may allow reaching the advantages as described before especially reliably and effectively.

With regard to further advantages and technical features of the system, it is referred to the description of the figures.

These and other aspects of the invention will be apparent from and elucidated with reference to the embodiments described hereinafter.

In the drawings:
- Fig. 1: shows a schematic view of a gear paddle switch unit according to the invention;
- Fig. 2: shows a detailed view of a part of the gear paddle switch unit according to figure 1;
- Fig. 3: shows a detailed view of a part of the gear paddle switch unit according to the invention in a further embodiment;
- Fig. 4: shows a detailed view of different magnets for a gear paddle switch units according to the invention;
- Fig. 5: shows a further schematic view of a gear paddle switch unit according to the invention; and
- Fig. 6: shows the effect of differing distances of the magnet to its counterpart in a gear paddle switch unit according to the invention.

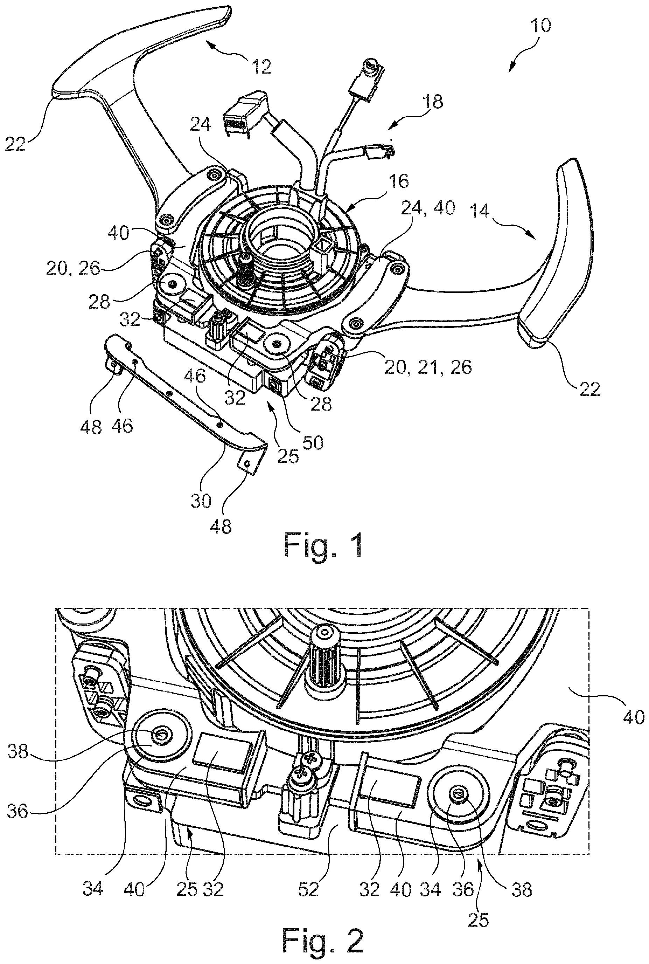

Figure 1 shows a schematic view of a gear paddle switch unit 10 for triggering a gear shift in a vehicle. Therefore, such a gear paddle switch unit 10 is preferably arranged in a vehicle, such as in a car. The gear paddle switch unit 10 may be used by a driver of the vehicle or in other words, a gear shift may be activated by the driver of the vehicle.

The gear paddle switch unit 10 comprises two steering wheel paddles 12, 14. These steering wheel paddles 12, 14 are arranged in vicinity to a unit 16 which is provided for accommodating a steering wheel. Such a unit 16 is generally widely known in the art and may be provided in vehicles known in the art. Therefore, the unit 16 is not described in detail here.

An electrical connector arrangement 18 is further shown which may be used for electrical connections for example to a control unit. It may be provided that such an electrical connector arrangement 18 may be used for transferring instructions with regard to a gear shift like described in detail down below.

Coming back to the steering wheel paddles 12, 14, one of these steering wheel paddles 12, 14 is provided for performing a gear shift to a higher gear and one of these steering wheel paddles 12, 14 is provided for performing a gear shift to a lower shift. With this regard, a gear shift as described here is generally possible in order to perform a gear shift both to a lower gear and to a higher gear.

The steering wheel paddles 12, 14 each are fixed in a pivoted manner and they thus comprise a pivot axis 20. In other words, the steering wheel paddles 12, 14 may be pivoted, or rotated, respectively, around the pivot axis 20. The pivot axis 20 is located in a bearing 21 for movably fixing the steering wheel paddles 12, 14. The bearing 21 is part of a main body 52 of the gear paddle switch unit so that the steering wheel paddles 12, 14 may be pivoted relative to the main body 52.

The steering wheel paddles 12, 14 each comprise an actuating portion 22 for activating the steering wheel paddle 12, 14 and an opposing triggering portion 24 for triggering a gear shift. Generally, the actuating portion 22 and the triggering portion 24 may be formed as a one part assembly, or they may be formed from two or more parts and may be connected to each other. In the latter embodiment, one of the actuating portion 22 and the triggering portion 24 may comprise a reception forming a hub as bearing 21 in which a shaft 26 is provided which forms the pivot axis 20.

It is further provided that each steering wheel paddle 12, 14 comprises a resting position and a triggering position. In the resting position, the steering wheel paddle 12, 14 is in an idle state and no gear shift shall be performed at that time. In contrast thereto, in case the steering wheel paddle 12, 14 is arranged in its triggering position, a gear shift should be performed and thus the triggering position of the steering wheel paddle 12, 14 is the active position in which a gear shift is triggered.

Like indicated above, the respective steering wheel paddle 12, 14 is transferable from the resting position to the triggering position and vice versa by a pivoting action. Thus in case a driver of the vehicle introduces a pivoting force into the respective steering wheel paddle 12, 14, such as by pulling the actuating portion 22, the steering wheel paddle 12, 14 may be transferred from its resting position into its triggering position. By releasing the actuating portion 22, the steering wheel paddle 12, 14 may return in its resting position by an actuating force preloading the triggering portion 24 in its resting position.

According to figure 1, the steering wheel paddles 12, 14 are shown in a resting position.

Figure 1 further shows that in the triggering portion 24 of each of the steering wheel paddles 12, 14 at least one magnet element 28 is provided. The magnet element 28 serves for an improved security and an improved functionality like described down below and is part of a triggering unit 25, wherein the triggering unit 25 is configured for providing a magnetic force for preloading the triggering portion 24 in the resting position for providing a haptic feedback to a user actuating the steering wheel paddle 12, 14.

Further, a support 30 is shown. The support 30 is part of the main body 52 and is formed from a ferromagnetic material, such as from iron. In more detail, the support 30 is formed as a bracket which traverses the magnets 28 of both steering wheel paddles 12, 14. The support 30 may be fixed for example by means of screws, which may proceed through respective holes 48 and may interact with threads 50, which may be part of the main body 52. The main body 52 may also form a stopper for the triggering portion 24 when the steering wheel paddles 12, 14 are transferred into the triggering position.

The support 30 may be provided in order to support the steering wheel paddles 12, 14 in case they are arranged in their resting position. In order to get in contact with the support 30, the steering wheel paddles 12, 14 each may comprise a spacer 32 for coming in contact to the support 30, or the bracket, respectively. The spacer 32 may for example be formed from a polymeric material in order not to be influenced from the magnetic force of the at least one magnet element 28.

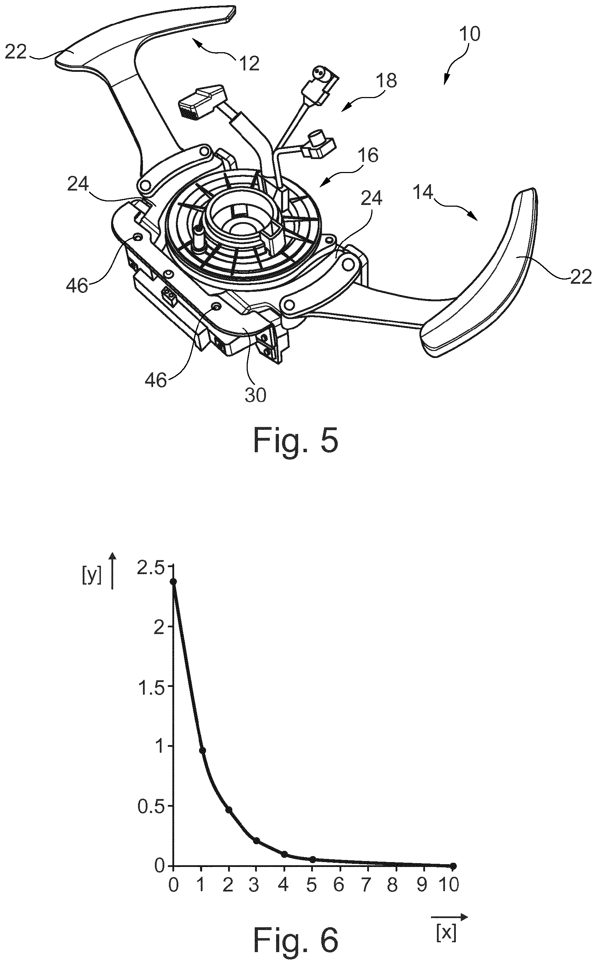

In figure 1, the support 30, or the bracket, respectively, is shown as separate part not being fixed above the at least one magnet element 28 for illustration purposes. Figure 5 shows the support 30 being fixed above the at least one magnet 28 and may in this arrangement serve as stopping point for the triggering portion 24 of the respective steering wheel paddles 12, 14 like described below. Further, it can be seen that the bracket, or the support 30, respectively, is part of the main body 52.

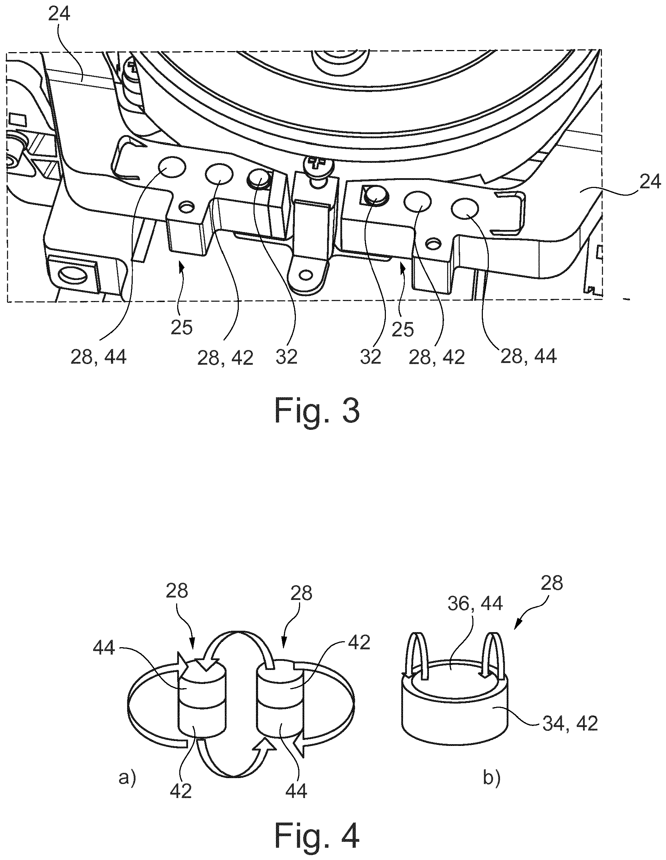

Coming back to figure 1, the magnet elements 28 which are provided in the triggering portions 24, or the main body 40 of the triggering portions 24, respectively, of the steering wheel paddles 12, 14 are formed as a neodymium magnet. This embodiment may allow the magnet elements 28 to have a very strong magnetization which in turn allows a very strong magnetic force and thus a very strong attraction of the counterpart which interacts with the magnet elements 28. According to figure 1, thus, a very strong attraction to the bracket and thus the main body 52 is achieved. Further, and in more detail, the magnet elements 28 as shown in figure 1 are designed as disc magnets being arranged with a radial magnetization. With this regard, the disc magnets comprise an outer portion 34 which may be formed as north pole and an inner portion 36 which may be formed as south pole. This is shown in more detail in figures 2 and 3.

The triggering portions 24 comprising the magnet elements 28 are shown in more detail in figure 2. It can be seen in more detail that each triggering portion 24 comprises a spacer 32 like indicated above. The spacers 32 each may be formed in a plate-like manner and may be fixed to the main body 40 of the triggering portion 24 for example by means of an adhesive or the like. Next to the spacer 32, the magnet elements 28 are shown with their inner portion 36 and its outer portion 34.

It is further provided that in a resting position of the steering wheel paddles 12, 14, the triggering portion 24 is positioned in contact to the support 30. In detail, the spacer 32 of the steering wheel paddles 12, 14 may be in contact with the support 30. On the other side, in case the steering wheel paddles 12, 14 are in a triggering position, the respective triggering portion 24 is positioned spaced apart from the support 30. Like indicated above, the steering wheel paddles 12, 14 are arranged such, that the steering wheel paddles 12, 14 may be pivoted by activating the activating portion 22 for positioning the steering wheel paddle 12, 14 in a resting position or in a triggering position.

In order to trigger a gear shift, a sensor not shown as such may be provided for detecting the position of the triggering portion 24. For example, a magnet sensor may be provided. This may allow detecting if the steering wheel paddles 12, 14 are in a resting position or in a triggering position. Based on the detection of the sensor, a gear shift may be triggered electronically by activating a respective mechanism, for example. Performing a gear shift based on electronic signals, however, is generally known in the art and is not described in detail here. The sensor may be provided in the main body 52, for example.

Due to the provision of the magnet element 28, the triggering portion 24 may be placed in contact to the support 30 by means of a magnetic preload force such, that increasing the distance of the triggering portion 24 to the support 30 is performed against the magnetic force. In other words, the magnetic preload force serves for a magnetic attraction of the particularly ferromagnetic support 30 to the at least one magnet 28. In other words, the triggering portion 24 is held in the resting position preloaded with a preload force caused by a triggering unit 25 so that the triggering portion 24 is moved from the triggering position to the resting position by said preload force after release of the steering wheel paddle 12, 14 by the user in the triggering position. Thus, according to figure 1, the support 30 is the ferromagnetic counterpart. According to this embodiment, the triggering unit 25 comprises the magnet element 28 as well as the bracket, or the main body, respectively, as ferromagnetic counterpart.

Providing the gear paddle switch unit 10 as described above may give the advantage that due to the fact that activating the steering wheel paddles 12, 14 has to be performed against the magnetic force, a strong haptic feedback to the driver of the vehicle and thus for the person who activated the steering wheel paddles 12, 14 may be provided. In fact, the feeling of the actuation is now provided by the magnetic attraction of the magnet element 28 towards the support 30 or the countart, respectively. Therefore, providing a solution according to the present invention may significantly improve using a gear paddle switch unit 10 for triggering a gear shift and thus especially such a gear paddle switch unit 10 which uses steering wheel paddles 12, 14.

Further, the figures clearly show that the solution according to the present invention avoids mechanical parts which touch each other so that mechanical wear and the problems arising therewith, such as aging which may lead to damages, can be excluded. Accordingly, the solution according to the invention may be much more reliable compared to the solutions of the prior art.

Apart from the above, the obtained activation may provide results which are much quicker due to the magnet behavior compared to solutions according to the prior art. Thus, gear shifts as such may be performed with a higher speed which may be an important factor especially for sportive cars, however not being restricted to sportive cars. In detail, an accelerated gear shift may be advantageous for any vehicle.

With regard to the magnetic attraction of the support 30 to the magnet 28, it may be advantageous that the distance between the magnet 28 and the support 30, or generally the counterpart, may be arranged in a very specific manner. With this regard, it is referred to figure 6.

In figure 6, the magnetic force leading to a magnetic attraction in kg is shown on the y-axis, whereas the x-axis shows the distance in mm between the magnet element 28 and a respective counterpart being attracted by the magnet element 28, such as the support 30, for a typical neodymium magnet. It can be seen that when providing a very small distance, the magnetic force changes significantly when changing the distance. However, the magnetic force is comparably strong. On the other side, in case the distance is comparably large, the change of the magnetic force is comparably small when changing the distance between the magnet and its counterpart. On the other side, the magnetic force is comparably small.

Therefore, the distance should be adjusted in a very defined manner in order to have long-time reliable and defined working properties such as a defined strength of gear shift feedback. It could be shown that a very effective compromise allowing the advantages of the invention and further defined working properties such as a defined haptic feedback in case the magnet 28 is positioned in a resting position of the steering wheel paddle 12, 14 in a distance to the support 30 in a range of > 0 mm to ≤ 5mm.

This may on the one hand be realized by arranging the spacers 32 respectively.

Apart from that it is provided that the distance of the magnet 28 to the support 30 is adjustable. In order to achieve this, it is provided that the magnet 28 is fixed by means of a screw 38 against a spring force. With this regard, the main body 40 of the triggering portion 24, comprises a reception, wherein beneath the magnet element 28 there is provided an element which exerts a spring force against the magnet element 28. For example, the element providing a spring force may be a simple spring or it may be an elastic element which is compressed when mounting and fixing the magnet. Such an elastic element may be formed from ethylene propylene diene rubber (EPDM), for example. The position of the magnet element 28 with regard to the support 30 may thus be defined by the spring. In this case, by rotating the screw, the distance of the magnet 30 to the support may be adjusted in an easy manner.

In order to achieve this even in case the system 10 is fully instructed in a vehicle, the support 30 or the bracket respectively comprises holes 46 through which the screw 38 can be used.

Figure 3 shows a further embodiment of a gear paddle switch unit 10 for triggering a gear shift in a vehicle. According to this embodiment, two magnet elements 28 are provided in each triggering portion 24. These magnet elements 28 are formed as rod magnets and are arranged such, that they show poles having a reversed orientation. According to figure 3, the north pole portions 42 as well as the south pole portions 44 are shown. Especially this arrangement may allow a very defined and further a very strong magnetic field which in turn allows a very strong magnetic attraction of the respective counterpart, i.e. the support 30. Therefore, this embodiment allows that the advantages as described before may be achieved especially effectively.

With this regard, the magnetic fields of respective magnet elements 28 are shown in figure 4. In detail, the magnetic field of to reverse orientated rod magnets are shown in figure 4a and a disc magnet is shown in Fig 4b.

With regard to figure 4a, it can be seen that the rod magnets each have their north pole portions 42 and their south pole portions 44. When being arranged in a reverse orientation, the magnetic field is concentrated in an area located in vicinity to the magnet elements 28, like shown by the arrows. Therefore, a very strong field may be achieved which may allow a very strong magnetic attraction to the support.

The same may apply when providing a disc magnet having a radial magnetization. This is shown in figure 4b, where a north pole portion 42 is provided at the circumference and thus at the outer portion 34, whereas a south pole portion 44 is provided in the center of the magnet 28 and thus in the inner portion 36. The magnetic field again is visualized by the arrows which indicates a strong attraction to the counterpart of the magnet element 28, such as to the support 30.

Therefore, the figures show embodiments in which the magnet element 28, or the plurality of magnet elements 28, respectively, is provided in the triggering portion 24 of the steering wheel paddles 12, 14. However, the description is in a corresponding manner also valid for an embodiment in which the magnet element 28 or the plurality of magnet elements 28, respectively, is provided in the support 30, as it is clearly understandable for the person skilled in the art.

As a result, when providing a gear paddle switch unit 10 like described above, a gear shift may be provided faster, more reliable and with an improved haptic feedback, which strongly improves a gear shift especially with regard to gear paddle switch units 10 comprising steering wheel paddles for triggering a gear shift.

### Reference signs list

- 10: gear paddle switch unit
- 12: steering wheel paddle
- 14: steering wheel paddle
- 16: unit
- 18: connector arrangement
- 20: pivot axis
- 21: bearing
- 22: actuating portion
- 24: triggering portion
- 25: triggering unit
- 26: shaft
- 28: magnet element
- 30: support
- 32: spacer
- 34: outer portion
- 36: inner portion
- 38: screw
- 40: main body
- 42: north pole portion
- 44: south pole portion
- 46: hole
- 48: hole
- 50: thread
- 52: main body

## Claims

1. Gear paddle switch unit for triggering a gear shift in a vehicle, wherein the gear paddle switch unit (10) comprises a main body (52), and at least one steering wheel paddle (12, 14) with an actuation portion (22) for actuating the steering wheel paddle (12, 14) by a user and an opposing triggering portion (24) for triggering a gear shift, wherein the gear paddle switch unit (10) further comprises a bearing (21) for movably fixing the at least one steering wheel paddle (12, 14) such, that the triggering portion (24) is pivotable relatively to the main body (52) between a resting position and a triggering position, wherein the triggering portion (24) is held in the resting position preloaded with a preload force caused by a triggering unit (25) so that the triggering portion (24) is moved from the triggering position to the resting position by said preload force after release of the steering wheel paddle (12, 14) by the user in the triggering position,
**characterised in that**,
the triggering unit (25) is configured for providing a magnetic force for preloading the triggering portion (24) in the resting position for providing a haptic feedback to a user when actuating the steering wheel paddle (12, 14), whereby the triggering unit (25) comprises a magnet element (28) and a ferromagnetic counterpart, whereby the magnet element (28) is provided at the triggering portion (24) and **in that** the ferromagnetic counterpart is comprised by the main body (52), and whereby the main body (52) comprises a bracket as ferromagnetic counterpart which traverses the magnet element (28) of the steering wheel paddle (12, 14).

2. Gear paddle switch unit according to claim 1, **characterized in that** the magnet element (28) is provided at the main body (52) and **in that** the ferromagnetic counterpart is comprised by the triggering portion (24).

3. Gear paddle switch unit according to claim 1, **characterized in** the magnet element (28) is provided at the triggering portion (24) and **in that** the ferromagnetic counterpart is comprised by a part distinct from the main body (52) or **in that** that the ferromagnetic counterpart is comprised by the triggering portion (24) and the magnet element (28) is provided at a part distinct from the main body (52).

4. Gear paddle switch unit according to any of claims 1 to 3, **characterized in that** the bearing (21) is part of the main body (52).

5. Gear paddle switch unit according to any of claims 1 to 4, **characterized in that** a sensor is provided for detecting the position of the triggering portion (24).

6. Gear paddle switch unit according to any of claims 1 to 5, **characterized in that** the magnet element (28) is formed as a neodymium magnet.

7. Gear paddle switch unit according to any of claims 1 to 6, **characterized in that** at least one disc magnet is provided, wherein the disc magnet is formed with a radial magnetization.

8. Gear paddle switch unit according to any of claims 1 to 7, **characterized in that** at least one rod magnet is provided.

9. Gear paddle switch unit according to any of claims 1 to 8, **characterized in** the distance of the magnet element (28) to the ferromagnetic counterpart is adjustable.

10. Gear paddle switch unit according to any of claims 1 to 9, **characterized in that** the triggering portion (24) comprises a spacer (32) for coming in contact to a support (30) for supporting the triggering portion (24) in a resting position or that a support (30) for supporting the triggering portion (24) in a resting position comprises a spacer (32) for coming in contact to the triggering portion (24).

11. Gear paddle switch unit according to any of claims 1 to 10, **characterized in that** the magnet element (28) is positioned in a resting position of the steering wheel paddle (12, 14) in a distance to the ferromagnetic counterpart in a range of > 0 mm to ≤ 5mm.

12. Gear paddle switch unit according to any of claims 1 to 11, **characterized in that** the gear paddle switch unit (10) comprises two steering wheel paddles (12, 14).

## Patentansprüche

1. Schaltpaddelschalteinheit zum Auslösen eines Gangwechsels in einem Fahrzeug, wobei die Schaltpaddelschalteinheit (10) einen Hauptkörper (52) und mindestens ein Lenkradpaddel (12, 14) mit einem Betätigungsabschnitt (22) zum Betätigen des Lenkradpaddels (12, 14) durch einen Benutzer und einem gegenüberliegenden Auslöseabschnitt (24) zum Auslösen eines Gangwechsels umfasst, wobei die Schaltpaddelschalteinheit (10) ferner ein Lager (21) zum beweglichen Fixieren des mindestens einen Lenkradpaddels (12, 14), so dass der Auslöseabschnitt (24) bezüglich des Hauptkörpers (52) zwischen einer Ruhestellung und einer Auslösestellung schwenkbar ist, umfasst, wobei der Auslöseabschnitt (24) mit einer von einer Auslöseeinheit (25) erzeugten Vorspannkraft in der Ruhestellung vorgespannt gehalten wird, so dass der Auslöseabschnitt (24) durch die Vorspannkraft aus der Auslösestellung in die Ruhestellung bewegt wird, nachdem der Benutzer das Lenkradpaddel (12, 14) in der Auslösestellung freigegeben hat, **dadurch gekennzeichnet, dass**
die Auslöseeinheit (25) dazu konfiguriert ist, eine Magnetkraft zum Vorspannen des Auslöseabschnitts (24) in der Ruhestellung bereitzustellen, zur Bereitstellung einer haptischen Rückmeldung an einen Benutzer beim Betätigen des Lenkradpaddels (12, 14), wobei die Auslöseeinheit (25) ein Magnetelement (28) und ein ferromagnetisches Gegenstück umfasst, wobei das Magnetelement (28) an dem Auslöseabschnitt (24) vorgesehen ist, und dass das ferromagnetische Gegenstück in dem Hauptkörper (52) enthalten ist, und wobei der Hauptkörper (52) eine Halterung als ferromagnetisches Gegenstück umfasst, die durch das Magnetelement (28) des Lenkradpaddels (12, 14) hindurchgeht.

2. Schaltpaddelschalteinheit nach Anspruch 1, **dadurch gekennzeichnet, dass** das Magnetelement (28) an dem Hauptkörper (52) vorgesehen ist und dass das ferromagnetische Gegenstück in dem Auslöseabschnitt (24) enthalten ist.

3. Schaltpaddelschalteinheit nach Anspruch 1, **dadurch gekennzeichnet, dass** das Magnetelement (28) an dem Auslöseabschnitt (24) vorgesehen ist und dass das ferromagnetische Gegenstück in einem von dem Hauptkörper (52) getrennten Teil enthalten ist oder dass das ferromagnetische Gegenstück in dem Auslöseabschnitt (24) enthalten ist und das Magnetelement (28) in einem von dem Hauptkörper (52) getrennten Teil vorgesehen ist.

4. Schaltpaddelschalteinheit nach einem der Ansprüche 1-3, **dadurch gekennzeichnet, dass** das Lager (21) Teil des Hauptkörpers (52) ist.

5. Schaltpaddelschalteinheit nach einem der Ansprüche 1-4, **dadurch gekennzeichnet, dass** ein Sensor zum Detektieren der Stellung des Auslöseabschnitts (24) vorgesehen ist.

6. Schaltpaddelschalteinheit nach einem der Ansprüche 1-5, **dadurch gekennzeichnet, dass** das Magnetelement (28) als ein Neodymmagnet ausgebildet ist.

7. Schaltpaddelschalteinheit nach einem der Ansprüche 1-6, **dadurch gekennzeichnet, dass** mindestens ein Scheibenmagnet vorgesehen ist, wobei der Scheibenmagnet mit einer radialen Magnetisierung ausgebildet ist.

8. Schaltpaddelschalteinheit nach einem der Ansprüche 1-7, **dadurch gekennzeichnet, dass** mindestens ein Stangenmagnet vorgesehen ist.

9. Schaltpaddelschalteinheit nach einem der Ansprüche 1-8, **dadurch gekennzeichnet, dass** der Abstand des Magnetelements (28) zu dem ferromagnetischen Gegenstück einstellbar ist.

10. Schaltpaddelschalteinheit nach einem der Ansprüche 1-9, **dadurch gekennzeichnet, dass** der Auslöserabschnitt (24) einen Abstandshalter (32) zum Inkontaktkommen mit einer Stütze (30) zum Stützen des Auslöseabschnitts (24) in einer Ruhestellung umfasst oder dass eine Stütze (30) zum Stützen des Auslöseabschnitts (24) in einer Ruhestellung einen Abstandshalter (32) zum Inkontaktkommen mit dem Auslöseabschnitt (24) umfasst.

11. Schaltpaddelschalteinheit nach einem der Ansprüche 1-10, **dadurch gekennzeichnet, dass** das Magnetelement (28) in einer Ruhestellung des Lenkradpaddels (12, 14) in einem Abstand zum ferromagnetischen Gegenstück positioniert ist, der in einem Bereich von > 0 mm bis ≤ 5 mm liegt.

12. Schaltpaddelschalteinheit nach einem der Ansprüche 1-11, **dadurch gekennzeichnet, dass** die Schaltpaddelschalteinheit (10) zwei Lenkradpaddel (12, 14) umfasst.

## Revendications

1. Unité de commutation à palette(s) de changement de vitesse pour déclencher un changement de vitesse dans un véhicule, l'unité de commutation à palette(s) de changement de vitesse (10) comprenant un corps principal (52), et au moins une palette de volant de direction (12, 14) comportant une partie d'actionnement (22) servant à l'actionnement de la palette de volant de direction (12, 14) par un utilisateur et une partie de déclenchement opposée (24) servant au déclenchement d'un changement de vitesse, l'unité de commutation à palette(s) de changement de vitesse (10) comprenant en outre un palier (21) servant à la fixation de manière mobile de l'au moins une palette de volant de direction (12, 14) de telle sorte que la partie de déclenchement (24) soit apte à pivoter par rapport au corps principal (52) entre une position de repos et une position de déclenchement, la partie de déclenchement (24) étant maintenue dans la position de repos sous précharge avec une force de précharge produite par une unité de déclenchement (25) de telle sorte que la partie de déclenchement (24) soit déplacée de la position de déclenchement à la position de repos par ladite force de précharge après relâchement de la palette de volant de direction (12, 14) par l'utilisateur dans la position de déclenchement,
**caractérisée en ce que**
l'unité de déclenchement (25) est conçue pour fournir une force magnétique pour précharger la partie de déclenchement (24) dans la position de repos afin de fournir une indication haptique à un utilisateur lors de l'actionnement de la palette de volant de direction (12, 14), l'unité de déclenchement (25) comprenant un élément magnétique (28) et un élément correspondant ferromagnétique, l'élément magnétique (28) étant placé au niveau de la partie de déclenchement (24) et **en ce que** l'élément correspondant ferromagnétique est inclus dans le corps principal (52), et le corps principal (52) comprenant un étrier à titre d'élément correspondant ferromagnétique qui s'étend transversalement à l'élément magnétique (28) de la palette de volant de direction (12, 14) .

2. Unité de commutation à palette(s) de changement de vitesse selon la revendication 1, **caractérisée en ce que** l'élément magnétique (28) est placé au niveau du corps principal (52) et **en ce que** l'élément correspondant ferromagnétique est inclus dans la partie de déclenchement (24).

3. Unité de commutation à palette(s) de changement de vitesse selon la revendication 1, **caractérisée en ce que** l'élément magnétique (28) est placé au niveau de la partie de déclenchement (24) et **en ce que** l'élément correspondant ferromagnétique est inclus dans une partie distincte vis-à-vis du corps principal (52) ou **en ce que** l'élément correspondant ferromagnétique est inclus dans la partie de déclenchement (24) et l'élément magnétique (28) est placé au niveau d'une partie distincte vis-à-vis du corps principal (52).

4. Unité de commutation à palette(s) de changement de vitesse selon l'une quelconque des revendications 1 à 3, **caractérisée en ce que** le palier (21) fait partie du corps principal (52).

5. Unité de commutation à palette(s) de changement de vitesse selon l'une quelconque des revendications 1 à 4, **caractérisée en ce qu'**un capteur est inclus pour détecter la position de la partie de déclenchement (24).

6. Unité de commutation à palette(s) de changement de vitesse selon l'une quelconque des revendications 1 à 5, **caractérisée en ce que** l'élément magnétique (28) est réalisé sous la forme d'un aimant en néodyme.

7. Unité de commutation à palette(s) de changement de vitesse selon l'une quelconque des revendications 1 à 6, **caractérisée en ce qu'**au moins un aimant en forme de disque est inclus, l'aimant en forme de disque étant formé avec une aimantation radiale.

8. Unité de commutation à palette(s) de changement de vitesse selon l'une quelconque des revendications 1 à 7, **caractérisée en ce qu'**au moins un aimant en forme de barre est inclus.

9. Unité de commutation à palette(s) de changement de vitesse selon l'une quelconque des revendications 1 à 8, **caractérisée en ce que** la distance entre l'élément magnétique (28) et l'élément correspondant ferromagnétique est réglable.

10. Unité de commutation à palette(s) de changement de vitesse selon l'une quelconque des revendications 1 à 9, **caractérisée en ce que** la partie de déclenchement (24) comprend une entretoise (32) destinée à venir en contact avec un support (30) servant à supporter la partie de déclenchement (24) dans une position de repos ou **en ce qu'**un support (30) servant à supporter la partie de déclenchement (24) dans une position de repos comprend une entretoise (32) destinée à venir en contact avec la partie de déclenchement (24).

11. Unité de commutation à palette(s) de changement de vitesse selon l'une quelconque des revendications 1 à 10, **caractérisée en ce que** l'élément magnétique (28) est placé, dans une position de repos de la palette de volant de direction (12, 14), à une distance de l'élément correspondant ferromagnétique comprise dans une plage de > 0 mm à ≤ 5 mm.

12. Unité de commutation à palette(s) de changement de vitesse selon l'une quelconque des revendications 1 à 11, **caractérisée en ce que** l'unité de commutation à palette(s) de changement de vitesse (10) comprend deux palettes de volant de direction (12, 14).
